# EUROPÄISCHE PATENTSCHRIFT

(11) **EP 3 896 424 B1**
(45) Veröffentlichungstag und Bekanntmachung des Hinweises auf die Patenterteilung: **28.02.2024**
(21) Anmeldenummer: 21166739.9
(22) Anmeldetag: 01.04.2021
(51) Int. Cl.: G01N 1/12, G01N 1/08

(54) **PROBENEHMER**
SAMPLING DEVICE
DISPOSITIF D'ÉCHANTILLONAGE

(30) Priorität: 02.04.2020 DE 102020109207; 21.04.2020 DE 102020110825
(43) Veröffentlichungstag der Anmeldung: 20.10.2021
(73) Patentinhaber: Hecht Technologie GmbH, 85276 Pfaffenhofen (DE)
(72) Erfinder: Pilsner, Florian, 85276 Pfaffenhofen/Ilm (DE); Haußmann, Matthias, 85276 Pfaffenhofen/Ilm (DE); Schwaiger, Thomas, 85276 Pfaffenhofen/Ilm (DE)
(74) Vertreter: Kilian Kilian & Partner mbB

(56) Entgegenhaltungen:
- WO-A1-96/29587
- WO-A1-97/47955
- DE-A1- 3 439 778
- DE-A1-102006 014 495
- US-A- 5 465 768

## Beschreibung

Die Erfindung betrifft einen Probenehmer, insbesondere einen manuell zu betätigenden Probenehmer, zur Entnahme einer Probe eines Produktes, insbesondere eines Schüttgutes, aus einem Behältnis, insbesondere aus einem Sack, und ein entsprechendes Verfahren.

Probenehmer sind aus dem Stand der Technik allgemein bekannt und werden beispielsweise bei der Qualitätsprüfung gelieferter Schüttgüter in Unternehmen eingesetzt.

Im Wesentlichen beinhalten die bekannten Probenehmer einen röhrenförmigen Probesammler, der einerseits spitz zulaufend ist und andererseits beispielsweise in einen Probeentnahmebehälter mündet.

Der Anwender durchstößt mittels der spitz zulaufenden Seite des Probesammlers das gelieferte Behältnis, wie beispielsweise einen Sack, der entsprechendes Schüttgut enthält. Innerhalb des Behältnis fällt das Schüttgut in eine Öffnung, die in dem Probesammler ausgebildet ist und fließt anschließend durch den Probesammler hindurch in den Probeentnahmebehälter.

Der Anwender zieht den Probesammler nach erfolgter Probeentnahme zurück bzw. aus dem angestochenen Behältnis heraus und verschließt die zurückbleibende Öffnung zumeist mittels eines Klebestreifens.

Diese Art der Probeentnahme ist insoweit problematisch, als dass eine Kontamination des sich in dem Behältnis befindenden Schüttguts aufgrund der Beschädigung des Behältnisses stattfindet, weil verunreinigende Partikel durch die zurückbleibende Öffnung in das Behältnis eindringen können.

Darüber hinaus bergen die zum Verschließen der zurückbleibenden Öffnungen verwendeten Klebestreifen die Gefahr, dass sie sich wieder lösen und der der Innenseite zugewandte Klebstoff mit dem Schüttgut in Kontakt kommt bzw. dieses verunreinigt.

### Obige Umstände sind unerwünscht.

Die Patentschrift WO 96/29587 zeigt eine Probeentnahmevorrichtung, welche eine Basisauflage und ein eingeschlossenes Entnahmerohr aufweist. Ein Anwender befestigt die Basisauflage an einem Behältnis, indem er eine freigelegte Klebefolie an die Außenoberfläche des Behältnisses drückt, und durchsticht mit dem Entnahmerohr die befestigte Klebefolie sowie die darunterliegende Oberfläche des Behältnisses, um eine Probe eines in dem Behältnis vorhandenen Schüttgutes zu nehmen. Die Basisauflage ist starr, sodass es insbesondere an den Kanten der Basis bei starken Bewegungen während der Probeentnahme zu Spannungen und einem Lösen der Klebeverbindung kommen kann. Unerwünschte Kontaminationen des Schüttguts in dem Behältnis und/oder der Probe sind die Folge.

Weiterer Stand der Technik ist in der Patentschrift DE 10 2006 062 982 B3 offenbart.

Vor diesem Hintergrund ist es Aufgabe der vorliegenden Erfindung, einen Probenehmer zu schaffen, der zuverlässiger zu befestigen ist und eine kontaminationsfreie Probeentnahme zulässt.

Diese Aufgabe wird mit einem Probenehmer gemäß Patentanspruch 1 gelöst. Bevorzugte Ausführungsformen sind Gegenstand der Unteransprüche.

*Der erfindungsgemäße Probenehmer für eine Entnahme einer Probe eines Produktes aus einem flexiblen Behältnis beinhaltet Folgendes:*
*einen Befestigungsabschnitt, der bestimmungsgemäß auf einer Außenoberfläche des Behältnisses befestigt wird und einen Durchgang definiert, und*
*einen Probeaufnahmeraum, der zumindest nach Befestigung des Befestigungsabschnittes an dem Behältnis gegenüber einer Außenumgebung verschlossen ist und in dem ein Probeentnahmeelement aufgenommen ist, wobei*
*der Probenehmer derart ausgebildet ist, dass nach Befestigung des Befestigungsabschnittes an dem Behältnis das Probeentnahmeelement durch den Durchgang hindurchgeführt werden kann, sodass es die Außenoberfläche des Behältnisses zur Entnahme der Probe durchstößt.*

Der erfindungsgemäße Probenehmer ist insbesondere ein durch einen Anwender manuell zu betätigender Probenehmer, kann aber auch ein automatisiert betätigter Probenehmer sein, der beispielsweise durch eine Robotervorrichtung betätigt wird.

Das Probeentnahmeelement ist beispielsweise ein lanzenförmiger Probesammler mit einer oder mehreren Öffnungen, in die die Probe fallen kann.

Die Behältnisse, aus denen eine Probe mit dem erfindungsgemäßen Probenehmer zu entnehmen ist, sind beispielsweise aus Kunststoff, Papier oder Textilien gebildet und beinhalten fließfähige Schüttgüter, wie zum Beispiel Pulver oder Granulate.

*Bevorzugt ist der Probeaufnahmeraum des erfindungsgemäßen Probenehmers durch eine flexible Folie gebildet, die einerseits an dem Befestigungsabschnitt befestigt ist und andererseits mittelbar oder unmittelbar verschlossen ist, und*
*die flexible Folie das Führen des Probeentnahmeelementes durch den Durchgang hindurch und das Durchstoßen der Außenoberfläche zulässt.*

Die den Probeaufnahmeraum festlegende flexible Folie kann beispielsweise eine durchsichtige Kunststofffolie sein, die sich durch eine Hand des Anwenders verformen lässt. Alternativen sind nicht durchsichtige Kunststofffolien oder auch Metallfolien die flexible sind, d. h. manuell verformbar sind.

Die den Probeaufnahmeraum festlegende Folie kann an dem Befestigungsabschnitt durch eine Verschweißung, Verklebung oder Klemmung befestigt sein. Gleiches gilt für die Befestigung der Folie an einem Griff, wobei diesbezüglich auch die Möglichkeit besteht, dass die den Probeaufnahmeraum festlegende Folie das Probeaufnahmeelement vollständig einschließt.

*Bevorzugt ist die flexible Folie des erfindungsgemäßen Probenehmers derart ausgestaltet und dimensioniert, dass sie in einem Zustand, in dem sich das Probeentnahmeelement zusammen mit der Probe nach der Probeentnahme in dem Probeaufnahmeraum befindet, zusammengeschnürt ist und durchtrennt werden kann, derart, dass der Befestigungsabschnitt, durch einen Rest der durchtrennten Folie verschlossen, an dem Behältnis verbleibt, und das Probeentnahmeelement zusammen mit der Probe, durch einen weiteren Rest der durchtrennten Folie eingeschlossen, frei handhabbar ist.*

*Der Durchgang des erfindungsgemäßen Probenehmers ist durch eine Verschließfolie verschlossen, derart, dass das Probeentnahmeelement bereits vor dem Befestigen des Befestigungsabschnittes an dem Behältnis in dem Probeaufnahmeraum vollständig eingeschlossen ist, und das Probeentnahmeelement bei der Probeentnahme derart geführt wird, dass es die Verschließfolie und die Außenoberfläche des Behältnisses durchstößt.*

Diese Ausgestaltung des erfindungsgemäßen Probenehmers ermöglicht eine sehr gute Kontaminationsvermeidung, weil das Probeentnahmeelement bereits vor Befestigung des Probenehmers vollständig in dem Probeaufnahmeraum eingeschlossen ist und nicht kontaminiert werden kann.

Die Verschließfolie kann verstärkende Strukturen, wie beispielsweise Maschenstrukturen, aufweisen.

*Bevorzugt beinhaltet der Befestigungsabschnitt des erfindungsgemäßen Probenehmers ein ringförmiges den Durchgang definierendes Anschlusselement mit einem der Außenoberfläche zugewandten Flanschabschnitt, wobei die Verschließfolie an dem Flanschabschnitt derart befestigt ist, dass sie den Durchgang überspannt.*

*Die Verschließfolie weist bevorzugt auf einer der Außenoberfläche zugewandten Seite eine Klebstoffschicht auf, wobei die Verschließfolie bei Befestigung des Probenehmers durch das ringförmige Anschlusselement des Befestigungsabschnitts an der Außenoberfläche anliegt und durch die Klebstoffschicht auf der Außenoberfläche haftet.*

Der Klebstoff kann beliebig sein, beispielsweise ein Haftklebstoff, ein thermischer Klebstoff oder ein durch UV-Strahlung auszuhärtender Klebstoff.

*Bevorzugt ist die Klebstoffschicht auf der der Außenoberfläche zugewandten Seite der Verschließfolie in einem Bereich, der sich auf dem Flanschabschnitt befindet, und in einem weiteren Bereich, der den Durchgang überspannt, gebildet, derart, dass nach Befestigung des Befestigungsabschnittes der gesamte weitere Bereich, der den Durchgang überspannt, an der Außenoberfläche haftet und der Bereich, der sich auf dem Flanschabschnitt befindet, zumindest abschnittsweise, bevorzugt insgesamt, an der Außenoberfläche haftet.*

Die Tatsache, dass die Außenoberfläche des Behältnisses und die Verschließfolie in dem gesamten Bereich des Durchgangs aneinander haften, hat den Vorteil, dass Partikel, die bereits vor Befestigung des Probenehmers auf der Außenoberfläche in diesem Bereich vorhanden waren, nicht in das Behältnis eindringen können, weil sie in der Klebstoffschicht eingeschlossen sind bzw. an dieser haften.

*Die Verschließfolie des erfindungsgemäßen Probenehmers steht in Bezug auf eine Achse des Durchgangs mit einem überstehenden Abschnitt radial nach außen über den Flanschabschnitt über, und die Klebstoffschicht ist auf der der Außenoberfläche zugewandten Seite des überstehenden Abschnitts gebildet, derart, dass nach Befestigung des Befestigungsabschnittes der überstehende Abschnitt zumindest abschnittsweise, bevorzugt insgesamt, an der Außenoberfläche haftet.*

*Der überstehende Abschnitt steht bevorzugt mindestens 1 cm (Zentimeter) über den Flanschabschnitt über und liegt bevorzugt in Bereichen von 1 bis 5 cm.*

Die radiale Abmessung des überstehenden Abschnitts kann bevorzugt konstant sein.

Der überstehende Abschnitt kann in Bezug auf den Flanschabschnitt auch eine wellige oder zackige Außenkontur aufweisen, um das Anbringen an einer gewölbten Außenoberfläche des Behältnisses vorteilhaft zu gestalten. Zusätzlich kann im Bereich des überstehenden Abschnittes der Verschließfolie ein Gewebe, beispielsweise in Maschenform, vorgesehen sein, welches den überstehenden Abschnitt strukturell verstärkt, die Befestigung an der Außenoberfläche des Behältnisses vorteilhaft beeinflusst und/oder einem Einreißen vorbeugt.

*Die Klebeschicht ist bevorzugt durch eine Schutzfolie geschützt.*

Die Schutzfolie kann bevorzugt einen nach außen über den überstehenden Abschnitt der Verschließfolie abstehenden Abschnitt aufweisen, welcher ein Abziehen der Schutzfolie von der Verschließfolie erleichtert.

Die Außenkontur der Schutzfolie kann auch bündig mit der Außenkontur des überstehenden Abschnitts der Verschließfolie ausgeführt sein. Für diesen Fall kann ein randseitiger Teil des überstehenden Abschnitts der Verschließfolie von der Klebeschicht befreit sein, sodass an diesem Teil ein Ansetzen für das Abziehen der Schutzfolie erleichtert ist.

*Der Befestigungsabschnitt des Probenehmers weist bevorzugt ein Vakuumabdeckelement auf, über das bei Befestigung des Probenehmers die Außenoberfläche des Behältnisses angesaugt wird.*

Das Vakuumabdeckelement kann bevorzugt transparent ausgeführt sein, sodass es eine durch elektromagnetische Strahlung, beispielsweise durch Bestrahlung mit UV-Licht, hervorgerufene Verklebung der Verschließfolie ermöglicht.

*Das Vakuumabdeckelement weist bevorzugt eine Öffnung auf, in welche der Probenehmer vor Befestigung an der Außenoberfläche des Behältnisses eingeführt wird, bis das Vakuumabdeckelement mit dem ringförmigen Anschlusselement in Anschlag kommt.*

Das Vakuumabdeckelement kann das Anschlusselement bevorzugt formschlüssig und in einer gegenüber der Umgebung abdichtenden Weise aufnehmen. Bevorzugt wird das Vakuumabdeckelement als eigenständiges Bauteil ausgeführt, sodass es auf das Befestigungselement aufbringbar bzw. vom Befestigungselement abnehmbar ist und somit wiederverwendbar ist.

*Der überstehende Abschnitt der Verschließfolie liegt bevorzugt vor dem Befestigen des Befestigungsabschnittes an der Außenoberfläche des Behältnisses an einer Ebene des Vakuumabdeckelements an.*

Die Ebene kann bevorzugt größenmäßig identisch mit dem überstehenden Abschnitt der Verschließfolie ausgeführt sein. Zusätzlich kann die Ebene mit einer Struktur oder einem Mechanismus, welcher beispielsweise auf magnetischer oder elektrostatischer Wirkung basiert, versehen sein. Somit kann ein Anliegen des überstehenden Abschnitts der Verschließfolie an der Ebene vorteilhaft beeinflusst werden.

Die Ebene kann bevorzugt mit Funktionselementen, welche beispielsweise eine thermische Beaufschlagung (Aufheizen) oder eine Bestrahlung ermöglichen, versehen sein, die die Verklebung des überstehenden Abschnitts auf der Außenoberfläche des Behältnisses vorteilhaft beeinflussen.

*Das Vakuumabdeckelement weist bevorzugt eine Vertiefung auf, welche die Achse der Öffnung des Vakuumabdeckelements umläuft und tiefer ausgebildet ist als die Ebene.*

Bei Befestigen des Probenehmers an der Außenoberfläche des Behältnisses kann ein Unterdruck in der Vertiefung erzeugt werden, wodurch die Außenoberfläche des Behältnisses angesaugt und durch ein Einsaugen in die umlaufende Vertiefung geglättet wird. Zusätzlich kann die Ebene, auf welcher der überstehende Abschnitt der Verschließfolie anliegt, kraftvoll auf die Außenoberfläche des Behältnisses aufgebracht werden. Somit kann eine starke, faltenfreie Verklebung des überstehenden Abschnitts der Verschließfolie und somit des Probenehmers an der Außenoberfläche des Behältnisses erfolgen.

*Die Ebene weist bevorzugt einen rillenförmigen Kanal auf, welcher ein Ansaugen des überstehenden Abschnitts an die Ebene ermöglicht.*

*Der rillenförmige Kanal umläuft bevorzugt die Öffnung des Vakuumabdeckelements und weitere rillenförmige Kanäle kreuzen bevorzugt in bestimmten Abständen den rillenförmigen Kanal radial zu der Achse der Öffnung hin.*

*Ein Vakuumanschluss durchläuft bevorzugt das Vakuumabdeckelement, mündet bevorzugt an einem Mündungsbereich und schafft bevorzugt eine kommunizierende Verbindung mit dem Kanal und*/*oder den weiteren Kanälen.*

Der Vakuumanschluss kann so ausgeführt sein, dass ein Unterdruckerzeuger, wie eine Pumpeneinrichtung, anschließbar ist. Das durch den Unterdruckerzeuger erzeugte Vakuum entsteht zwischen der Außenoberfläche und dem Vakuumabdeckelement und sorgt für ein - Faltenbildung verhinderndes - Zusammenziehen der Außenoberfläche und des Befestigungsabschnittes bzw. der Verschließfolie inklusive Klebstoffschicht. Der Vakuumanschluss kann bevorzugt parallel zu der Achse der Öffnung des Vakuumabdeckelements verlaufen. Zusätzlich kann der Vakuumanschluss auf einer der Außenoberfläche des Behältnisses abgewandten Seite ein Ventil aufweisen, sodass der Unterdruck auch nach Entfernen oder Abschalten des Unterdruckerzeugers aufrechterhalten werden kann.

Im Folgenden wird eine bevorzugte Ausführungsform des erfindungsgemäßen Probenehmers unter Bezug auf die beigefügten Figuren erläutert.
**Fig. 1A bis 1C** zeigen eine perspektivische Ansicht eines Probenehmers gemäß einer Ausführungsform der Erfindung;
**Figur 2** zeigt einen Längsschnitt eines ringförmigen Anschlusselements, eines Probesammlers und eines Griffs des Probenehmers, wobei eine Verschließfolie an dem ringförmigen Anschlusselement vorgesehen ist und eine Folie sich zwischen dem ringförmigen Anschlusselement und dem Griff erstreckt, sodass ein Probeaufnahmeraum gebildet wird;
**Figur 3** zeigt die Verschließfolie und das ringförmige Anschlusselement des erfindungsgemäßen Probenehmers in einer perspektivischen Ansicht;
**Figur 4** zeigt die Verschließfolie des Probenehmers in einer perspektivischen Ansicht;
**Figuren 5** **und** **6** zeigen perspektivische Ansichten eines Vakuumabdeckelements 7 des Probenehmers gemäß der vorliegenden Ausführungsform der Erfindung; und
**Figuren 7** **und** **8** zeigen einen Längsschnitt des zusammengesetzten Probenehmers vor Durchführung einer Probeentnahme.
**Figuren 9A bis 9G** zeigen ein erfindungsgemäßes Verfahren, das bevorzugt mit dem in Figuren 1 bis 8 gezeigten Probenehmer durchgeführt wird.

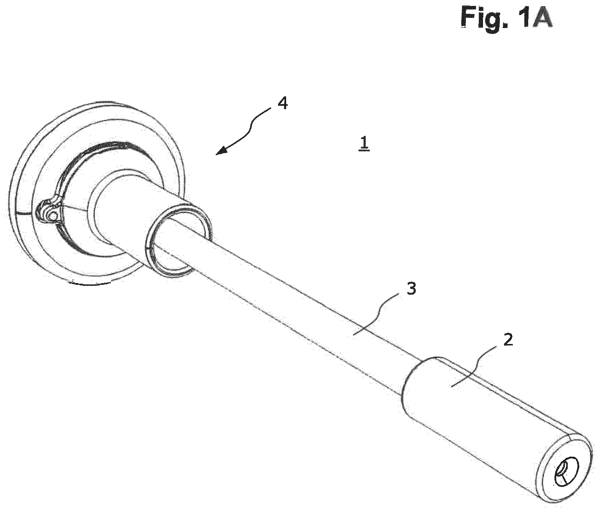

Figuren 1A bis 1B zeigen einen erfindungsgemäßen Probenehmer in perspektivischen Ansichten, der durch einen Anwender manuell handzuhaben ist.

Der Probenehmer 1 wird bestimmungsgemäß dafür eingesetzt, eine Probe eines Produktes aus einem Behältnis, das beispielsweise ein aus einem Kunststoff, Papier oder Textil gebildeter Sack ist, zu entnehmen. Bei dem Produkt handelt es sich insbesondere um ein fließfähiges Schüttgut, wie beispielsweise ein Granulat oder Pulver. Das Behältnis ist in den Figuren nicht gezeigt.

Der erfindungsgemäße Probenehmer 1 beinhaltet bevorzugt einen Griff 2, den ein Anwender zur Handhabung und Bedienung des Probenehmers 1 mit einer Hand bestimmungsgemäß ergreift.

Ein Probeentnahmeelement 3 erstreckt sich von dem Griff 2 in Richtung eines Befestigungsabschnitts 4 des Probenehmers 1. Das Probeentnahmeelement 3 ist in dieser Ausführungsform ein lanzenförmiger Probesammler. Die Ausführung des Probeentnahmeelementes 3 als lanzenförmiger Probesammler ist lediglich bevorzugt und hierauf nicht beschränkt.

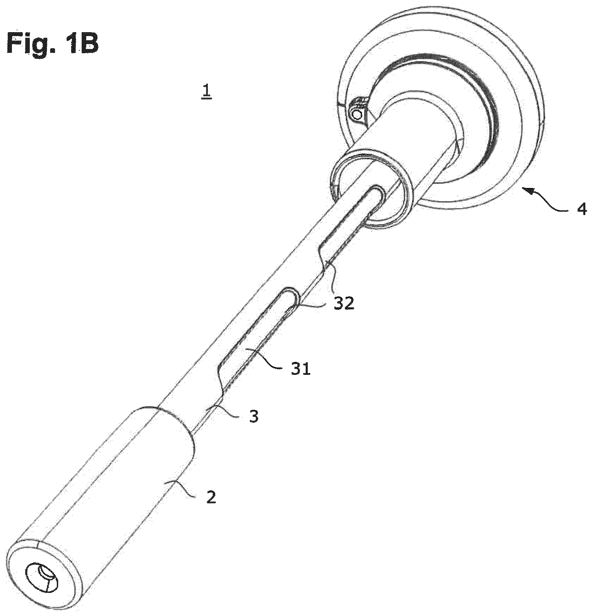

Der lanzenförmige Probesammler 3 weist einen Hohlraum 31 auf bzw. ist hohl ausgeführt, wobei eine Vielzahl von Öffnungen 32 entlang der Längserstreckung des Probesammlers 3 ausgebildet ist, wie es in Figur 1B gezeigt ist. In der konkreten Ausführungsform 2 beinhaltet der lanzenförmige Probesammler 3 zwei Öffnungen 32.

Während der im Folgenden noch näher erläuterten Probeentnahme fällt das Produkt, bei dem es sich beispielsweise um das genannte Schüttgut (Pulver oder Granulat) handelt, durch die Öffnungen 32 hindurch in den Hohlraum 31 des Probesammlers 3.

Des Weiteren beinhaltet der erfindungsgemäße Probenehmer 1 einen Befestigungsabschnitt 4, der bei bestimmungsgemäßer Verwendung des Probenehmers 1 an dem nicht gezeigten Behältnis, wie zum Beispiel dem Sack, befestigt wird.

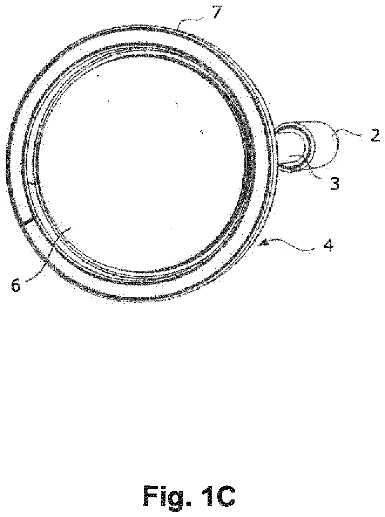

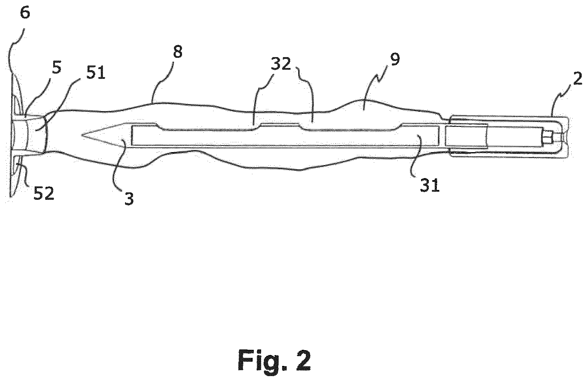

Der Befestigungsabschnitt 4 beinhaltet ein ringförmiges Anschlusselement 5, das in Figur 2 erkennbar ist, eine Verschließfolie 6, die in Figur 1C sichtbar ist, und ein Vakuumabdeckelement 7.

Das ringförmige Anschlusselement 5 ist in Figur 2 zusammen mit dem Probesammler 3 und dem daran befestigten Griff 2 gezeigt. Die Verschließfolie 6 ist an dem ringförmigen Anschlusselement 5 befestigt, worauf weiter unten im Detail noch eingegangen wird.

Das ringförmige Anschlusselement 5 definiert einen Durchgang 51, der so dimensioniert ist, dass der Probesammler 3 in den Durchgang 51 in Richtung seiner Achse bzw. Durchgangsachse eingeführt werden kann.

Das ringförmige Anschlusselement 5 umfasst weiterhin auf der bestimmungsgemäß dem Behältnis zugewandten Seite einen Flanschabschnitt 52, der sich in Bezug auf die Durchgangsachse des Durchgangs 51 radial nach außen erstreckt. Der Flanschabschnitt 52 wird bei Befestigung des Probenehmers 1 durch den Anwender an eine nicht gezeigte Außenoberfläche des Behältnisses gedrückt und dort befestigt. Hierauf wird im Folgenden ebenfalls noch näher eingegangen.

Eine in Figur 2 gezeigte Folie 8 (bzw. ein Folienschlauch 8) erstreckt sich von dem ringförmigen Anschlusselement 5 zu dem Griff 2. Die Folie 8 ist bevorzugt transparent. Die Folie 8 ist einerseits an dem ringförmigen Anschlusselement 5 auf einer dem Behältnis bestimmungsgemäß abgewandten Seite und andererseits an dem Griff 2 befestigt.

Die Folie 8 kann beispielsweise an dem ringförmigen Anschlusselement 5, insbesondere an dem den Durchgang 51 festlegenden Abschnitt festgeklemmt und/oder mit diesem Abschnitt fest verschweißt und/oder verklebt sein.

Gleichermaßen kann die Folie 8 an dem Griff 2 festgeklemmt und/oder mit diesem verschweißt und/oder verklebt sein. Es ist auch möglich, dass die Folie 8 an dem Griff 2 nicht befestigt, sondern hinter dem Griff 8 verschlossen ist, beispielsweise mittelbar durch einen Verschluss oder unmittelbar - es sich ergo bei der Folie 8 um einen Foliensack handelt, der den Probesammler 3 vollständig umschließt/einschließt.

Die Folie 8 bildet zusammen mit dem ringförmigen Anschlusselement 5 einen Probeaufnahmeraum 9 aus, in dem sich der Probesammler 3 befindet. Der Probesammlers 3 ist in dieser Ausführungsform in dem Probeaufnahmeraum 9 vollständig eingeschlossen.

Die bereits genannte Verschließfolie 6 ist an dem ringförmigen Anschlusselement 5 auf einer bestimmungsgemäß dem Behältnis zugewandten Seite befestigt.

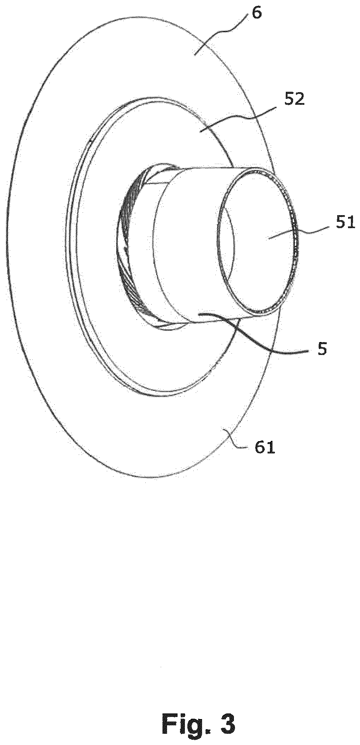

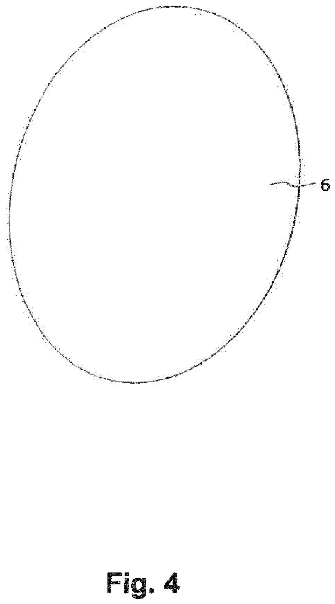

Figuren 3 und 4 zeigen die Verschließfolie 6 in perspektivischen Ansichten.

Die Verschließfolie 6 ist an dem Flanschabschnitt 52 so befestigt, dass sie den Durchgang 51 des ringförmigen Anschlusselements 5 auf der bestimmungsgemäß dem Behältnis zugewandten Seite vollständig überspannt. D. h. auf der dem Behältnis zugewandten Seite ist der Durchgang 51 durch die Verschließfolie 6 vollständig verschlossen.

In Zusammenschau mit Figur 2 ergibt sich hieraus, dass der Probesammlers 3 in dem Probeaufnahmeraum 9 vollständig eingeschlossen ist und bereits vor Befestigung des Probenehmers 1 an dem Behältnis mit der Außenumgebung nicht in Kontakt kommen kann, ergo der Probesammler 3 vor einer Kontamination mit in der Außenumgebung vorhandenen Partikeln geschützt ist.

Die Verschließfolie 6 ist beispielsweise mit dem Flanschabschnitt 52 fest verschweißt und/oder verklebt.

Auf der dem Behältnis zugewandten Seite der Verschließfolie 6, die in Figur 4 gezeigt ist, befinden sich folglich keinerlei Elemente. Die Verschließfolie 6 kann deshalb sehr gut in Anlage mit der Außenoberfläche des nicht gezeigten Behältnisses gebracht werden.

Die Verschließfolie 6 dient bestimmungsgemäß zur Befestigung des Probenehmers 1 an dem nicht gezeigten Behältnis bzw. auf dessen Außenoberfläche. Hierfür ist auf der dem Behältnis zugewandten Seite der Verschließfolie 6 (Figur 4) eine Klebstoffschicht ausgebildet, die dazu dient, die Verschließfolie 6 auf der Außenoberfläche des Behältnisses derart festzukleben, dass die gesamte Verschließfolie 6 auf der Außenoberfläche haftet und der erfindungsgemäße Probenehmer 1 insgesamt auf der Außenoberfläche des Behältnisses befestigt ist.

Die Erfindung ist auf keine bestimmte Art von Klebstoff eingeschränkt. Beispielsweise kann es sich bei der Klebstoffschicht um solch eine handeln, die durch eine Schutzfolie geschützt ist, um ein vorzeitiges Aushärten/Austrocknen des Klebstoffes zu verhindern.

Der Anwender zieht die Schutzfolie kurz vor Befestigung des Probenehmers von der Verschließfolie 6 ab und drückt die Verschließfolie anschließend über den Flanschabschnitt 52 an die Außenoberfläche des Behältnisses, wo der Klebstoff schnell aushärtet und somit der Probenehmer 1 an dem Behältnis befestigt ist.

Mögliche Klebstoffe sind beispielsweise Haftklebstoffe, wie sie beispielsweise bei Klebebändern zum Einsatz kommen, thermische Klebstoffe, die durch Bestrahlung mittels eines Heizstrahlers aushärten, oder beispielsweise UV Klebstoffe, die durch Bestrahlung mit UV-Licht aushärten.

Die Verschließfolie 6 besitzt eine Dicke in der Größenordnung erhältlicher Klebebänder und ist flächenmäßig, wie in Figuren 3 und 4 gezeigt, größer als der Flanschabschnitt 52 des ringförmigen Anschlusselements 5. Insbesondere besitzt die Verschließfolie 6 einen überstehenden Abschnitt 61, der sich von dem Flanschabschnitt 52 in Bezug auf die Achse des Durchgangs 51 radial nach außen erstreckt.

Der überstehende Abschnitt 61 ist über den gesamten Umfang des Flanschabschnitts 52 ausgebildet. Bevorzugt ist der überstehende Abschnitt 61 über den gesamten Umfang hinweg konstant, d. h. der Abstand des Umfangs der Verschließfolie 6 bzw. des überstehenden Abschnitts 61 zu dem Umfang des Flanschabschnitts 52 ist über den gesamten Umfang hinweg konstant und beträgt bevorzugt mindestens 1 cm, 2 cm, 3cm, 4cm, 5cm.

Der überstehende Abschnitt 61 der Verschließfolie 6 sorgt für eine verbesserte Haftung/Befestigung des Probenehmers an der Außenoberfläche des Behältnisses, weil er sich flexibel an Falten und Krümmungen der Außenoberfläche anpasst.

Bevorzugt ist in die Verschließfolie 6 ein maschenartiges Gewebe integriert, dass die Verschließfolie 6 verstärkt und für eine sichere/reißfeste Befestigung des gesamten Probenehmers an dem Behältnis sorgt.

Alternativ zu der genannten Verschweißung der Verschließfolie 6 an dem ringförmigen Anschlusselement 5 bzw. dessen Flanschabschnitt 52 ist es ebenfalls möglich, die Verschließfolie 6 durch eine Klemmung an dem ringförmigen Anschlusselement 5 zu befestigen. Hierfür beinhaltet das ringförmige Anschlusselement 5 in dem Flanschabschnitt 52 eine Vielzahl von Durchgängen, in die entsprechende Schrauben eingesetzt werden.

Die Schrauben durchlaufen bzw. durchstoßen die Verschließfolie 6 an entsprechenden Stellen und greifen auf der dem Behältnis zugewandten Seite in entsprechende Gewinde ein, die beispielsweise in einer die Verschließfolie 6 an den Flanschabschnitt 52 drückenden Gegenplatte gebildet sind. Die Gewinde können beispielsweise durch in die Gegenplatte versenkte Muttern ausgebildet sein. Alternativ zu der Schraubverbindung kann die Gegenplatte durch einen lösbaren Formschluss, beispielsweise in Form einer hintergreifenden Verrastung, die durch eine mittelbare oder unmittelbare manuelle Verformung wieder lösbar ist, an dem Flanschabschnitt 52 befestigt sein, sodass die Verschließfolie festgeklemmt ist.

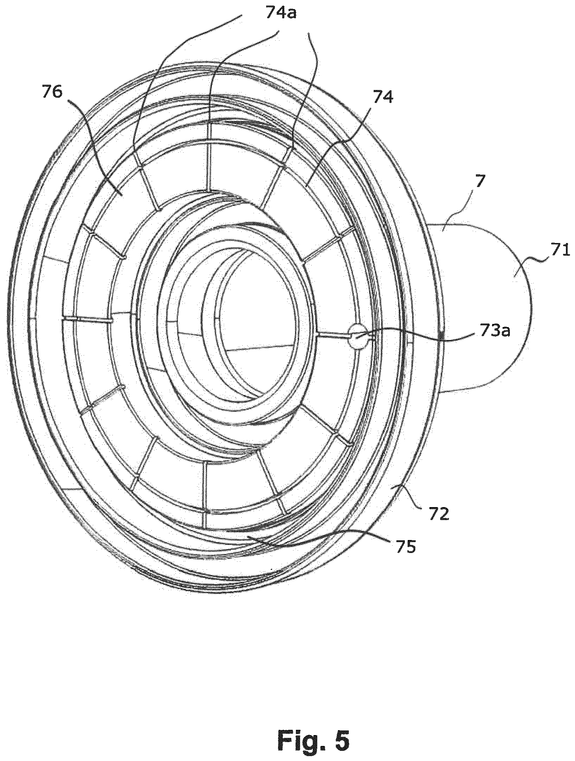

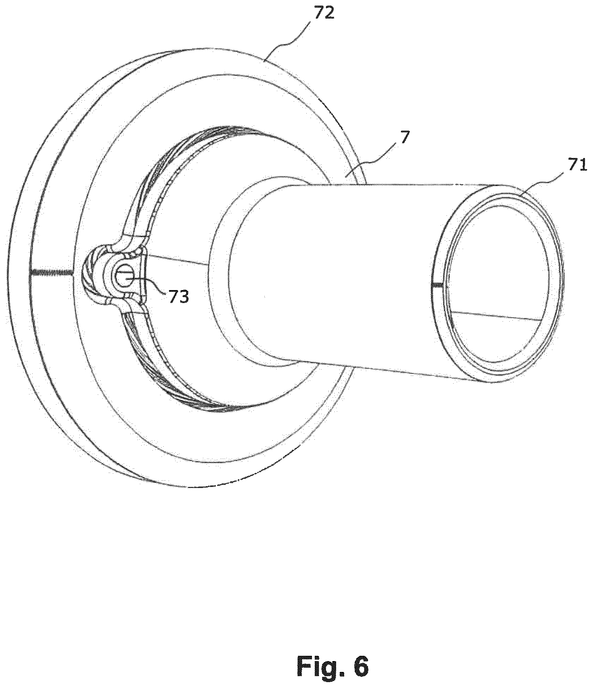

Der in Figuren 1A bis 1C gezeigte Befestigungsabschnitt 4 beinhaltet bevorzugt das bereits genannte Vakuumabdeckelement 7. Dieses Element ist in den Figuren 5 und 6 in perspektivischen Ansichten vergrößert dargestellt.

Das Vakuumabdeckelement 7 beinhaltet einen röhrenförmigen Abschnitt 71 und einen vergrößerten Flanschabschnitt 72, der sich an den röhrenförmigen Abschnitt 71 anschließt und radial erstreckt. Eine in dem röhrenförmigen Abschnitt 71 gebildete Öffnung durchläuft das Vakuumabdeckelement 7 vollständig, wie es aus Figuren 5 und 6 ersichtlich wird.

Das Vakuumabdeckelement 7 wird bestimmungsgemäß vor Befestigung des Probenehmers 1 über den Probeaufnahmeraum 9 geschoben, d. h. die Seite des Probesammlers 3, auf der der Griff 2 gebildet ist, wird von der in Figur 5 gezeigten Seite aus in die Öffnung eingeführt und hindurchgeschoben bis das Vakuumabdeckelement 7 mit dem ringförmigen Anschlusselement 5 in Anschlag kommt.

Hierdurch wird die Folie 8, die den Probeaufnahmeraum 9 definiert, zusammen mit dem darin eingeschlossenen Probesammler 3 durch die Öffnung des Vakuumabdeckelement 7 hindurchgeführt.

Der vergrößerte Flanschabschnitt 72 besitzt einen Vakuumanschluss 73, an den eine nicht gezeigte Vakuumleitung bzw. eine Unterdruckerzeugungseinheit angeschlossen werden kann.

Der Vakuumanschluss 73 durchläuft den vergrößerten Flanschabschnitt 72 vollständig. Figur 5 zeigt einen Mündungsbereich 73a des Vakuumanschlusses auf der dem Behältnis zugewandten Seite. Auf dieser Seite steht der Vakuumanschluss an dem Mündungsbereich 73a in Kommunikation mit einem die Achse der Öffnung des Vakuumabdeckelements 7 vollständig umlaufenden, rillenförmigen Kanal 74.

Der rillenförmige Kanal 74 wird in bestimmten Abständen von jeweils radial zu der Achse der Öffnung verlaufenden weiteren rillenförmigen Kanälen 74a gekreuzt, die jeweils in eine Vertiefung 75 münden, die ebenfalls die genannte Achse umläuft und tiefer ausgebildet ist als eine Ebene 76, in der die rillenförmigen Kanäle und die entsprechenden radial verlaufenden Kanäle 74a ausgebildet sind.

Die Ebene 76 entspricht größenmäßig der Verschließfolie 6 und ist bevorzugt mit dem überstehenden Abschnitt 61 der Verschließfolie 6 größenmäßig identisch.

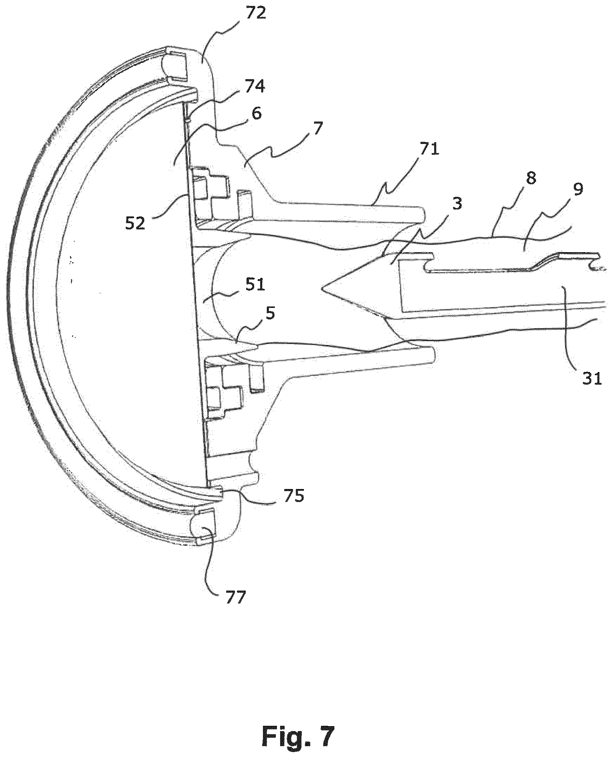

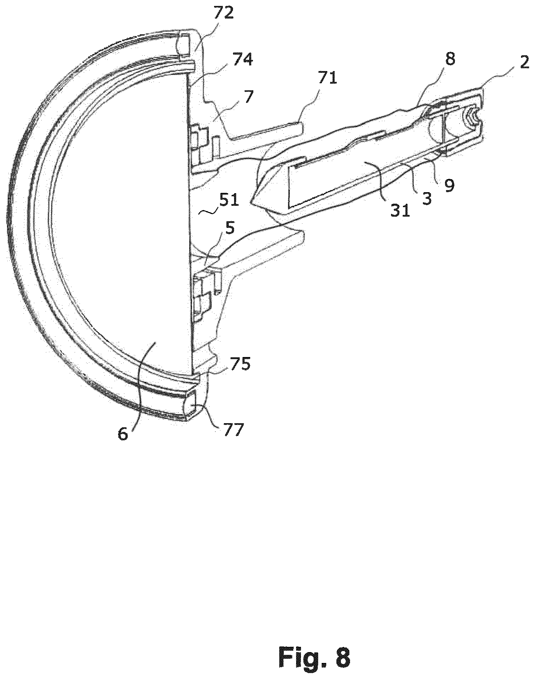

Figuren 7 und 8 zeigen den erfindungsgemäßen Probenehmer 1 gemäß der vorliegenden Ausführungsform in einem zusammengesetzten Zustand und in einem Längsschnitt entlang der Achse des Durchgangs 51 des ringförmigen Anschlusselementes 5 bzw. der Achse der Öffnung des Vakuumabdeckelement 7, wobei beide Achsen koaxial ausgerichtet sind.

Der Probesammlers 3 ist in dem zusammengesetzten Zustand in dem Probeaufnahmeraum 9 vollständig eingeschlossen.

Die den Probeaufnahmeraum 9 festlegende Folie 8 ist, wie bereits im Vorhergehenden erläutert wurde, einerseits an dem ringförmigen Anschlusselement 5 und andererseits an dem Griff 2 befestigt.

Das Vakuumabdeckelement 7 ist vollständig an das ringförmige Anschlusselement 5 herangeschoben, sodass die Folie 8 die Öffnung des Vakuumabdeckelements 7 durchläuft.

Das Vakuumabdeckelement 7 greift mit dem ringförmigen Anschlusselement 5 ineinander, bevorzugt über einen Adapterring, wobei in diesem Zustand die Verschließfolie 6 bzw. der überstehende Abschnitt 61 der Verschließfolie 6 an der Ebene 76, in der die rillenförmigen Kanäle gebildet sind, anliegt.

Bevorzugt kann das Vakuumabdeckelement 7 auf der dem Behältnis zugewandten Seite bevorzugt noch eine Dichtlippe 77 aufweisen, die über den gesamten Umfang der in Figuren 7 und 8 gezeigten Seite hinweg ausgebildet ist.

Der Probenehmer ist in dem in Figuren 7 und 8 gezeigten Zustand fertig für eine Probeentnahme.

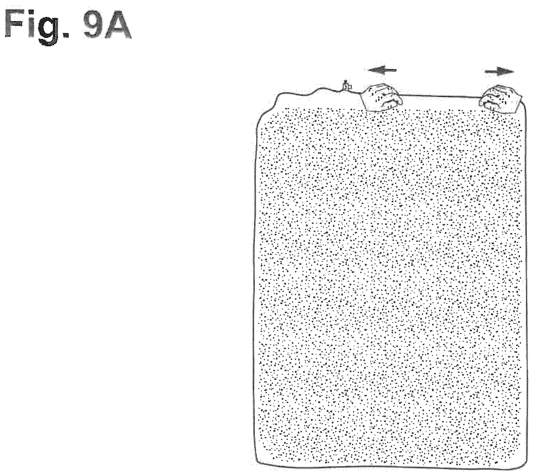

Das entsprechende Verfahren wird im Folgenden unter Bezug auf die Figuren 9A bis 9F erläutert.

### Schritt 1 (Figur 9A)

Der Anwender bringt das Behältnis, aus dem eine Probe zu entnehmen ist, in eine gewünschte Position. Die Außenoberfläche des Behältnis wird manuell glattgezogen, sodass eine gut zugängliche Stelle für die Probeentnahme entsteht.

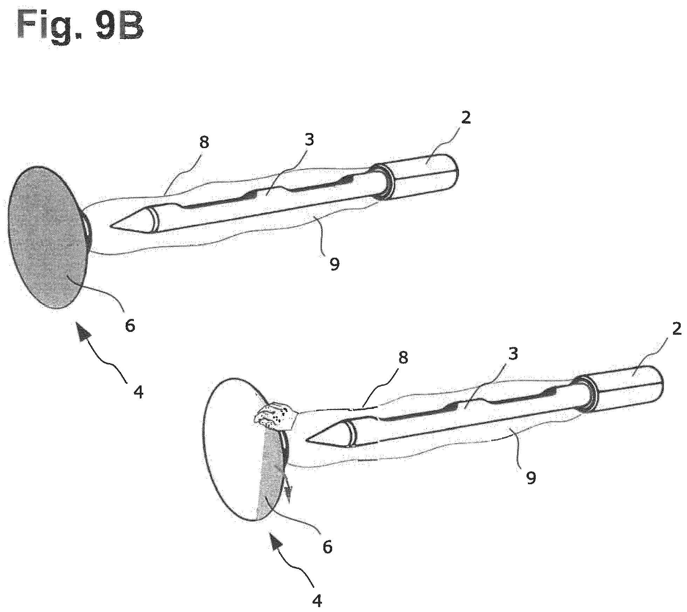

### Schritt 2 (Figur 9B)

Anschließend entfernt der Anwender eine Schutzfolie von der Verschließfolie 6, die auf der dem Behältnis zugewandten Seite der Verschließfolie 6 vorhanden ist.

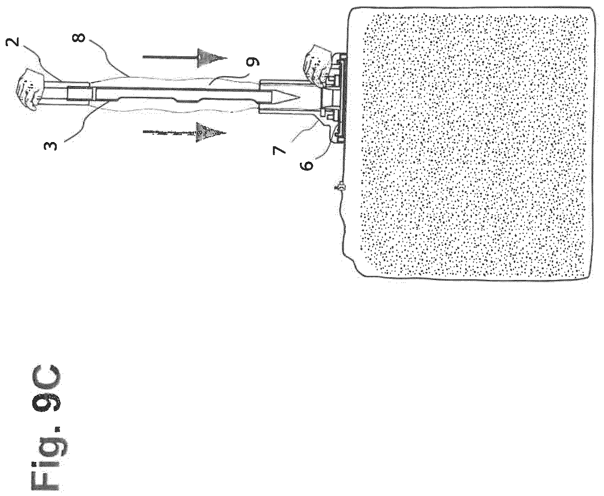

### Schritt 3 (Figur 9C)

Der Anwender führt anschließend das optionale bzw. bevorzugte Vakuumabdeckelement 7 an die Außenoberfläche des Behältnisses und drückt, mittelbar über das Vakuumabdeckelement 7, die klebende Seite der Verschließfolie 6 an die Außenoberfläche des Behältnisses.

Zu diesem Zeitpunkt kann die Vakuumerzeugungseinrichtung, die in Figuren 7, 8 und 9 nicht gezeigt ist, bereits arbeiten, wodurch der überstehende Abschnitt 61 der Verschließfolie 6 an die Ebene 76 angezogen und hierdurch eine Faltenbildung oder ein Knicken des überstehenden Abschnittes 61 der Verschließfolie 6 vor/bei dem Andrücken an die Außenoberfläche des Behältnisses verhindert wird.

Wenn der Anwender das Vakuumabdeckelement 7 an die Außenoberfläche des Behältnisses drückt, erzeugt die Vakuumerzeugungseinrichtung in der Vertiefung 75, die die Verschließfolie 6 umläuft, einen Unterdruck und sorgt für ein Ansaugen/Anziehen der Außenoberfläche des Behältnisses. Hierdurch wird ein kraftvolles Anziehen der Außenoberfläche an die klebende Seite der Verschließfolie 6 bewirkt sowie eine Faltenbildung minimiert, weil Abschnitte des Behältnisses in die Vertiefung 75 gezogen werden und somit eine faltenfreie Außenoberfläche, an der die klebende Seite der Verschließfolie haftet, entsteht.

Der Probenehmer 1 ist in dem erreichten Zustand auf der Außenoberfläche des Behältnisses befestigt bzw. mit dieser stabil verbunden. Die Vakuumabdeckung 7 kann nunmehr entfernt werden oder an dem Ort verbleiben.

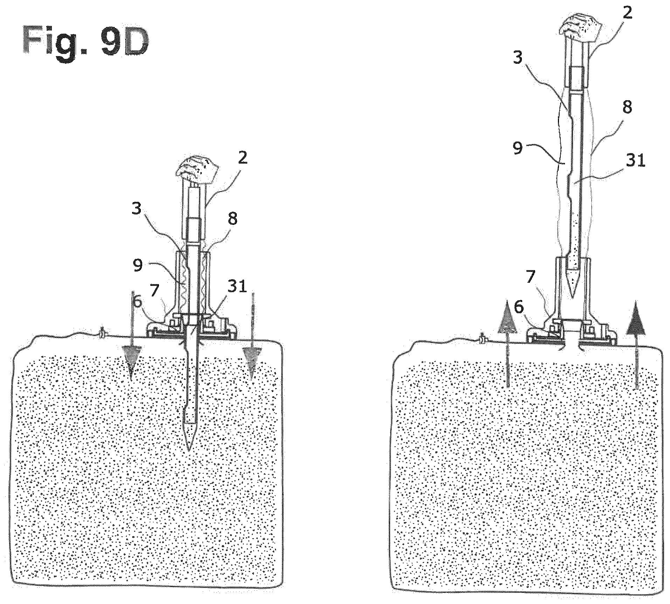

### Schritt 4 (Figur 9D)

Der Anwender greift nunmehr den Griff 2 und durchstößt mit der in Figuren 7 und 8 gezeigten spitzen Seite des Probesammlers 3 die den Durchgang überspannende Verschließfolie 6 sowie die Außenoberfläche des Behältnisses.

Wenn der Griff 2 maximal an das Vakuumabdeckelement 7 herangeführt ist, befinden sich der Probesammlers 3 sowie seine entsprechenden Öffnungen 32 innerhalb des Behältnis, wodurch das Produkt in den Hohlraum 31 des Probesammlers 3 fallen kann.

Anschließend zieht der Anwender den Probesammlers 3 über den Griff 2 wieder aus dem Behältnis zurück. Die Probe des Produktes befindet sich nunmehr zusammen mit dem Probesammlers 3 innerhalb des Probeaufnahmeraums 9.

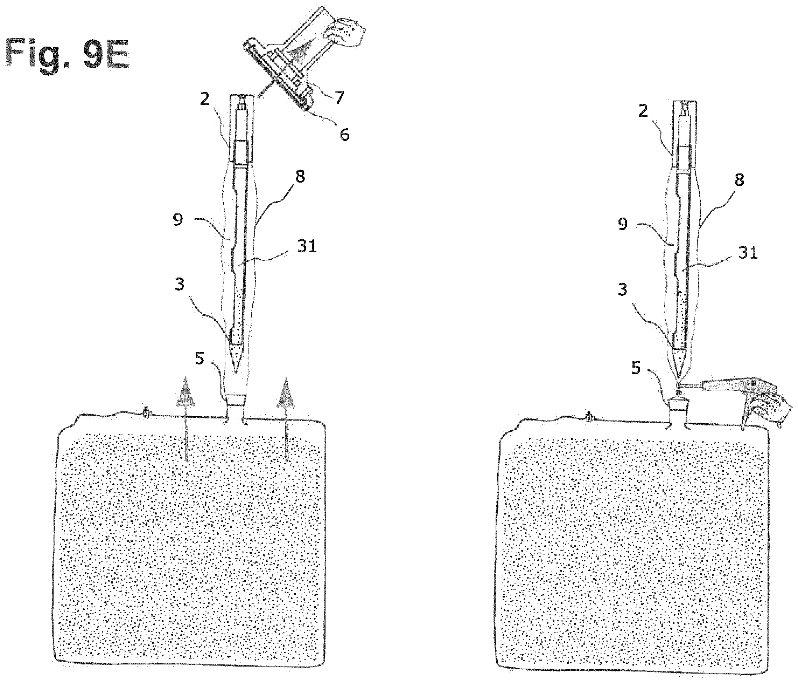

### Schritt 5 (Figur 9E)

Der Anwender entfernt nunmehr das Vakuumabdeckelement 7, wodurch die Folie 8 vollständig zugänglich wird. Der Anwender schnürt die Folie 8 in einem Bereich zwischen dem Probesammler 3 und dem ringförmigen Anschlusselement 5 zusammen und verschließt die Folie an dieser Stelle. Das kann beispielsweise durch ein Versschweißgerät oder durch zwei handelsübliche Kabelbinder geschehen. Bei diesen Tätigkeiten treten in der Regel starke Bewegungen auf, die an dem Anschlusselement 5 und dem entsprechenden Flanschabschnitt zu starken Beanspruchungen/Kräften führen. Der verklebte, überstehende Abschnitt der Verschließfolie 6 verhindert, dass die Klebung sich löst und es potentiell zu Kontaminationen kommen kann.

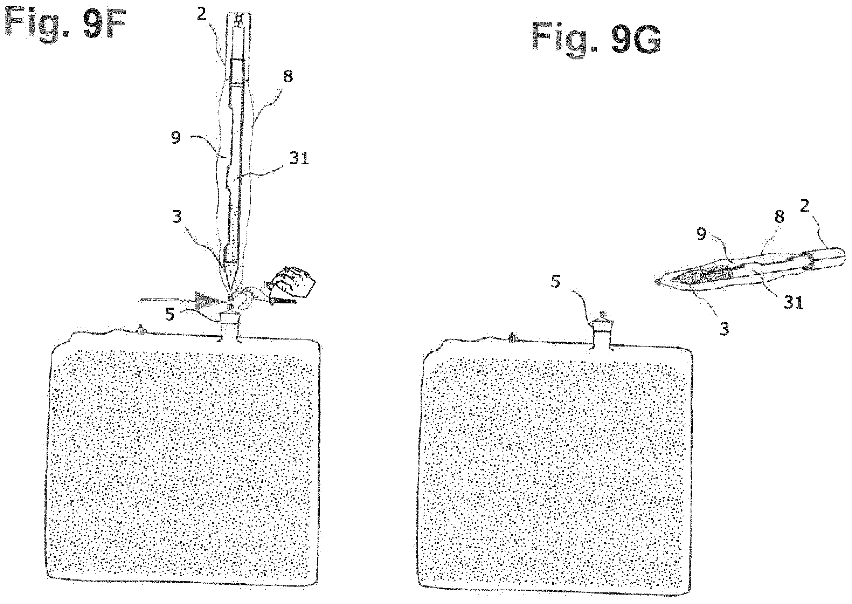

### Schritt 6 (Figuren 9F und 9G)

Final durchtrennt der Anwender die Folie 8 in dem verschlossenen Bereich, derart, dass ein Rest der Folie 8 verschlossen an dem ringförmigen Anschlusselement 5 verbleibt und ein weiterer Rest der Folie 8 den Probesammlers 3 zusammen mit der entnommenen Probe einschließt. Beispielsweise durchtrennt der Anwender die Folie 8 zwischen den zwei zusammengezogenen Kabelbindern oder die erzeugte Verschweißung der Folie 8, derart, dass beide Seiten verschlossen/verschweißt bleiben.

### (Wirkung)

Es ist ersichtlich, dass die für die Probeentnahme notwendige Beschädigung des Behältnisses zuverlässig verschlossen bleibt und eine Kontamination durch in der Außenumgebung vorhandene Partikel nicht stattfinden kann. Außerdem ist die entnommene Probe ebenfalls eingeschlossen und kann nicht kontaminiert werden.

Ergo ist eine kontaminationsfreie Probeentnahme möglich.

Zu erwähnen ist zudem, dass die Verschließfolie 6 in dem Bereich, in dem sie den Durchgang 51 des ringförmigen Anschlusselements 5 überspannt, mit der Außenoberfläche des Behältnisses durch die Klebstoffschicht bereits verbunden ist, bevor der Anwender diesen Bereich und die Außenoberfläche mit dem Probesammler durchstößt.

Die Verklebung des den Durchgang überspannenden Bereichs der Verschließfolie 6 mit der Außenoberfläche des Behältnisses sorgt dafür, dass Verunreinigungen, die sich auf der Außenoberfläche des Behältnis befinden, bei der Probeentnahme nicht in das Behältnis eindringen können, weil sie durch die Verklebung eingeschlossen sind.

Insoweit führt diese Verklebung zu einer äußerst kontaminationsarmen Probeentnahme, wobei gleichzeitig ein sicherer Verschluss nach der Probeentnahme an de Behältnis verbleibt.

Außerdem sorgt der flexible überstehende Abschnitt der Verschließfolie dafür, dass eine sichere Befestigung des Anschlusselements gewährleistet ist.

### (Varianten)

In einer nicht erfindungsgemäßen Variante für weniger kritische Fälle ist es allerdings nicht notwendig, dass die Verschließfolie 6 den Durchgang des ringförmigen Anschlusselements überspannt, d. h. vor Befestigung des Probenehmers 1 kann der Probeaufnahmeraum 9 über den Durchgang in dem ringförmigen Abschlusselement 5 offen sein.

Die Dimensionen des erläuterten Probenehmers 1 sind so gewählt, dass der Anwender als Handriffe und Verfahrensschritt mit der Hand ausführen kann. Der Griff 2 und das Vakuumabdeckelement 7 sind jeweils so dimensioniert, dass der Anwender sie jeweils in einer Hand halten kann.

Die einzelnen Elemente des Probenehmers 1 können aus einem Kunststoff oder Metall gebildet sein.

## Patentansprüche

1. Probenehmer (1) für eine Entnahme einer Probe eines Produktes aus einem flexiblen Behältnis, aufweisend:
einen Befestigungsabschnitt (4), der bestimmungsgemäß auf einer Außenoberfläche des Behältnisses befestigt wird und einen Durchgang (51) definiert, und
einen Probeaufnahmeraum (9), der zumindest nach Befestigung des Befestigungsabschnittes (4) an dem Behältnis gegenüber einer Au-ßenumgebung verschlossen ist und in dem ein Probeentnahmeelement (3) aufgenommen ist, wobei
der Probenehmer (1) derart ausgebildet ist, dass nach Befestigung des Befestigungsabschnittes (4) an dem Behältnis das Probeentnahmeelement (3) durch den Durchgang hindurchgeführt werden kann, sodass es die Außenoberfläche des Behältnisses zur Entnahme der Probe durchstößt, wobei
der Durchgang (51) durch eine Verschließfolie (6) verschlossen ist, derart, dass das Probeentnahmeelement (3) bereits vor dem Befestigen des Befestigungsabschnittes (4) an dem Behältnis in dem Probeaufnahmeraum (9) vollständig eingeschlossen ist, und das Probeentnahmeelement (3) bei der Probeentnahme derart geführt wird, dass es die Verschließfolie (6) und die Außenoberfläche des Behältnisses durchstößt, **dadurch gekennzeichnet, dass**
die Verschließfolie (6) in Bezug auf eine Achse des Durchgangs (51) mit einem flexiblen überstehenden Abschnitt (61) radial nach au-ßen über einen Flanschabschnitt (52) übersteht und eine Klebstoffschicht auf der der Außenoberfläche zugewandten Seite des überstehenden Abschnitts (61) gebildet ist, derart, dass nach Befestigung des Befestigungsabschnittes (4) der überstehende Abschnitt (61) zumindest abschnittsweise, bevorzugt insgesamt, an der Außenoberfläche haftet.

2. Probenehmer (1) nach Anspruch 1, wobei
der Probeaufnahmeraum (9) durch eine flexible Folie (8) gebildet ist, die einerseits an dem Befestigungsabschnitt (4) befestigt ist und andererseits mittelbar oder unmittelbar verschlossen ist, und
die flexible Folie (8) das Führen des Probeentnahmeelementes (3) durch den Durchgang (51) hindurch und das Durchstoßen der Außenoberfläche zulässt.

3. Probenehmer (1) nach Anspruch 2, wobei
die flexible Folie (8) derart ausgestaltet und dimensioniert ist, dass sie in einem Zustand, in dem sich das Probeentnahmeelement (3) zusammen mit der Probe nach der Probeentnahme in dem Probeaufnahmeraum (9) befindet, zusammengeschnürt und durchtrennbar ist, derart, dass der Befestigungsabschnitt (4), durch einen Rest der durchtrennten Folie (8) verschlossen, an dem Behältnis verbleibt, und das Probeentnahmeelement (3) zusammen mit der Probe, durch einen weiteren Rest der durchtrennten Folie (8) eingeschlossen, frei handhabbar ist.

4. Probenehmer (1) gemäß Anspruch 1, wobei der Befestigungsabschnitt (4) ein ringförmiges den Durchgang (51) definierendes Anschlusselement (5) mit dem der Außenoberfläche zugewandten Flanschabschnitt (52) aufweist, und die Verschließfolie (6) an dem Flanschabschnitt (52) derart befestigt ist, dass sie den Durchgang (51) überspannt und den flexiblen überstehenden Abschnitt bildet.

5. Probenehmer (1) gemäß Anspruch 4, wobei die Verschließfolie (6) auf einer der Außenoberfläche zugewandten Seite die Klebstoffschicht aufweist, und
die Verschließfolie (6) bei Befestigung des Probenehmers durch das ringförmige Anschlusselement (5) des Befestigungsabschnitts (4) an der Außenoberfläche anliegt und durch die Klebstoffschicht auf der Außenoberfläche haftet.

6. Probenehmer (1) gemäß Anspruch 4, wobei die Klebstoffschicht auf der der Außenoberfläche zugewandten Seite der Verschließfolie (6) in einem Bereich, der sich auf dem Flanschabschnitt (52) befindet, und in einem weiteren Bereich, der den Durchgang (51) überspannt, gebildet ist, derart, dass nach Befestigung des Befestigungsabschnittes (4) der gesamte weitere Bereich, der den Durchgang (51) überspannt, an der Außenoberfläche haftet und der Bereich, der sich auf dem Flanschabschnitt (52) befindet, zumindest abschnittsweise, bevorzugt insgesamt, an der Außenoberfläche haftet.

7. Probenehmer (1) nach einem der vorangehenden Ansprüche, wobei der flexible überstehende Abschnitt (61) mindestens 1 cm über den Flanschabschnitt (52) übersteht und liegt bevorzugt in Bereichen von 1 bis 5 cm.

8. Probenehmer (1) nach einem der vorangehenden Ansprüche, wobei die Klebeschicht durch eine Schutzfolie geschützt ist.

9. Probenehmer (1) nach einem der vorangehenden Ansprüche, wobei der Befestigungsabschnitt (4) ein Vakuumabdeckelement (7) aufweist, über das bei Befestigung des Probenehmers (1) die Außenoberfläche des Behältnisses angesaugt wird.

10. Probenehmer (1) nach Anspruch 9, wobei das Vakuumabdeckelement (7) eine Öffnung aufweist, in welche der Probenehmer (1) vor Befestigung an der Außenoberfläche des Behältnisses eingeführt wird, bis das Vakuumabdeckelement (7) mit dem ringförmigen Anschlusselement (5) in Anschlag kommt.

11. Probenehmer (1) nach Anspruch 9 oder 10, wobei der überstehende Abschnitt (61) der Verschließfolie (6) vor dem Befestigen des Befestigungsabschnittes (4) an der Außenoberfläche des Behältnisses an einer Ebene (76) des Vakuumabdeckelements (7) anliegt.

12. Probenehmer (1) gemäß Anspruch 11, wobei das Vakuumabdeckelement (7) eine Vertiefung (75) aufweist, welche die Achse der Öffnung des Vakuumabdeckelements (7) umläuft und tiefer ausgebildet ist als die Ebene (76).

13. Probenehmer (1) gemäß einem der Ansprüche 11 oder 12, wobei die Ebene (76) einen rillenförmigen Kanal (74) aufweist, welcher ein Ansaugen des überstehenden Abschnitts (61) an die Ebene (76) ermöglicht.

14. Probenehmer (1) gemäß Anspruch 13, wobei der rillenförmige Kanal (74) die Öffnung des Vakuumabdeckelements umläuft und weitere rillenförmige Kanäle (74a) in bestimmten Abständen den rillenförmigen Kanal (74) radial zu der Achse der Öffnung hin kreuzen.

15. Probenehmer (1) gemäß einem der Ansprüche 13 oder 14, wobei ein Vakuumanschluss (73) das Vakuumabdeckelement (7) durchläuft, an einem Mündungsbereich (73a) mündet und eine kommunizierende Verbindung zu dem/den Kanal/Kanälen schafft.

## Claims

1. Sampling device (1) for taking a sample of a product from a flexible container, comprising:
an attachment portion (4) which is intended to be attached to an outer surface of the container and defines a passage (51), and
a sample collection chamber (9) which is closed off from an external environment at least after the attachment portion (4) has been attached to the container and in which a sample collection element (3) is accommodated, wherein
the sampling device (1) is configured such that, after attachment of the attachment portion (4) to the container, the sample collection element (3) can be passed through the passage so that it pierces the outer surface of the container to collect the sample, wherein
the passage (51) is closed off by a sealing film (6) in such a way that the sample collection element (3) is already completely enclosed in the sample collection chamber (9) before the attachment potion (4) is attached to the container, and the sample collection element (3) is guided during sampling in such a way that it pierces the sealing film (6) and the outer surface of the container, **characterized in that**
the sealing film (6) projects radially outwards with respect to an axis of the passage (51) with a flexible projecting portion (61) over a flange portion (52) and an adhesive layer is formed on the side of the projecting portion (61) facing the outer surface, such that after attaching the attachment portion (4) the projecting portion (61) adheres to the outer surface at least partially, preferably entirely.

2. Sampling device (1) according to claim 1, wherein
the sample collection chamber (9) is formed by a flexible foil (8), which on the one hand is attached to the attachment portion (4) and on the other hand is directly or indirectly closed off, and
the flexible foil (8) allows to guide the sample collection element (3) through the passage (51) and to pierce the outer surface.

3. Sampling device (1) according to claim 2, wherein
the flexible foil (8) is configured and dimensioned such that, in a state in which the sample collection element (3) together with the sample is located in the sample collection chamber (9) after collection of the sample, it is laced together and can be severed in such a way that the attachment portion (4), closed by a remainder of the severed foil (8), remains on the container, and the sample collection element (3) together with the sample, enclosed by a further remainder of the severed foil (8), can be handled freely.

4. Sampling device (1) according to claim 1, wherein the attachment portion (4) has a ring-shaped connecting element (5) defining the passage (51) with the flange portion (52) facing the outer surface, and the sealing film (6) is attached to the flange portion (52) in such a way that it spans the passage (51) and forms the flexible projecting portion.

5. Sampling device (1) according to claim 4, wherein the sealing film (6) has the adhesive layer on a side facing the outer surface, and
the sealing film (6) lies against the outer surface when the sampling is attached through the ring-shaped connecting element (5) of the attachment portion (4) and adheres to the outer surface through the adhesive layer.

6. Sampling device (1) according to claim 4, wherein the adhesive layer is formed on the side of the sealing foil (6) facing the outer surface in an area which is located on the flange portion (52) and in a further area which spans the passage (51), in such a way that after attaching the attachment portion (4), the entire further area which spans the passage (51) adheres to the outer surface and the area which is located on the flange portion (52) adheres to the outer surface at least partially, preferably entirely.

7. Sampling device (1) according to one of the preceding claims, wherein the flexible projecting portion (61) projects at least 1 cm beyond the flange portion (52) and is preferably in the range of 1 to 5 cm.

8. Sampling device (1) according to one of the preceding claims, wherein the adhesive layer is protected by a protective film.

9. Sampling device (1) according to one of the preceding claims, wherein the attachment portion (4) comprises a vacuum cover element (7), via which the outer surface of the container is sucked in when the sampling device (1) is attached.

10. Sampling device (1) according to claim 9, wherein the vacuum cover element (7) has an opening into which the sampling device (1) is inserted before attachment to the outer surface of the container until the vacuum cover element (7) comes into abutment with the ring-shaped connecting element (5).

11. Sampling device (1) according to claim 9 or 10, wherein the projecting portion (61) of the sealing film (6) abuts against a plane (76) of the vacuum cover element (7) before the attachment portion (4) is attached to the outer surface of the container.

12. Sampling device (1) according to claim 11, wherein the vacuum cover element (7) has a depression (75) which runs around the axis of the opening of the vacuum cover element (7) and is formed deeper than the plane (76).

13. Sampling device (1) according to any one of claims 11 or 12, wherein the plane (76) comprises a groove-shaped channel (74) which allows suction of the projecting portion (61) to the plane (76).

14. Sampling device (1) according to claim 13, wherein the groove-shaped channel (74) runs around the opening of the vacuum cover element and further groove-shaped channels (74a) cross the groove-shaped channel (74) radially towards the axis of the opening at certain intervals.

15. Sampling device (1) according to any one of claims 13 or 14, wherein a vacuum port (73) passes through the vacuum cover element (7), opens at a mouth portion (73a) and provides a communicating connection to the channel(s).

## Revendications

1. Dispositif d'échantillonnage (1) pour un prélèvement d'un échantillon d'un produit d'un récipient flexible, présentant :
une section de fixation (4), qui est fixée selon l'usage prévu sur une surface extérieure du récipient et définit un passage (51), et
un espace de réception d'échantillon (9), qui est fermé par rapport à un environnement extérieur au moins après fixation de la section de fixation (4) sur le récipient et dans lequel un élément de prélèvement d'échantillon (3) est reçu, dans lequel
le dispositif d'échantillonnage (1) est réalisé de telle manière qu'après fixation de la section de fixation (4) sur le récipient, l'élément de prélèvement d'échantillon (3) peut être guidé à travers le passage de part en part si bien qu'il traverse la surface extérieure du récipient pour prélever l'échantillon, dans lequel
le passage (51) est fermé par un film de fermeture (6) de telle manière que l'élément de prélèvement d'échantillon (3) est déjà avant la fixation de la section de fixation (4) sur le récipient, totalement intégré dans l'espace de réception d'échantillon (9), et l'élément de prélèvement d'échantillon (3) est guidé de telle manière lors du prélèvement d'échantillon qu'il traverse le film de fermeture (6) et la surface extérieure du récipient, **caractérisé en ce que**
le film de fermeture (6) dépasse vers l'extérieur radialement d'une section de bride (52) avec une section flexible (61) qui dépasse par rapport à un axe du passage (51) et une couche de colle est formée sur le côté, tourné vers la surface extérieure, de la section (61) qui dépasse, de telle manière qu'après fixation de la section de fixation (4), la section (61) qui dépasse adhère au moins par endroits, de manière préférée en totalité, à la surface extérieure.

2. Dispositif d'échantillonnage (1) selon la revendication 1, dans lequel
l'espace de réception d'échantillon (9) est formé par un film flexible (8), qui est fixé d'une part sur la section de fixation (4) et est fermé d'autre part indirectement ou directement, et
le film flexible (8) permet le guidage de l'élément de prélèvement d'échantillon (3) à travers le passage (51) de part en part et la traversée de la surface extérieure.

3. Dispositif d'échantillonnage (1) selon la revendication 2, dans lequel
le film flexible (8) est configuré et dimensionné de telle manière qu'il est resserré dans un état, dans lequel l'élément de prélèvement d'échantillon (3) se trouve conjointement avec l'échantillon après le prélèvement d'échantillon dans l'espace de réception d'échantillon (9) et peut être sectionné de telle manière que la section de fixation (4) reste sur le récipient par un reste du film (8) sectionné et l'élément de prélèvement d'échantillon (3) peut être manipulé librement conjointement avec l'échantillon, par un autre reste du film (8) sectionné.

4. Dispositif d'échantillonnage (1) selon la revendication 1, dans lequel la section de fixation (4) présente un élément de raccordement (5) annulaire définissant le passage (51) avec la section de bride (52) tournée vers la surface extérieure, et le film de fermeture (6) est fixé de telle manière sur la section de bride (52) qu'il enjambe le passage (51) et forme la section flexible qui dépasse.

5. Dispositif d'échantillonnage (1) selon la revendication 4, dans lequel le film de fermeture (6) présente sur un côté tourné vers la surface extérieure la couche de colle, et
le film de fermeture (6) repose sur la surface extérieure lors de la fixation du dispositif d'échantillonnage par l'élément de raccordement (5) annulaire de la section de fixation (4) et adhère à la surface extérieure par la couche de colle.

6. Dispositif d'échantillonnage (1) selon la revendication 4, dans lequel la couche de colle est formée sur le côté tourné vers la surface extérieure du film de fermeture (6) dans une zone, qui se trouve sur la section de bride (52), et dans une autre zone, qui enjambe le passage (51) de telle manière qu'après la fixation de la section de fixation (4), la totalité de l'autre zone, qui enjambe le passage (51), adhère à la surface extérieure et la zone, qui se trouve sur la section de bride (52), adhère au moins par endroits, de manière préférée en totalité, à la surface extérieure.

7. Dispositif d'échantillonnage (1) selon l'une quelconque des revendications précédentes, dans lequel la section flexible (61) qui dépasse dépasse de la section de bride (52) d'au moins 1 cm et se situe de manière préférée dans des plages de 1 à 5 cm.

8. Dispositif d'échantillonnage (1) selon l'une quelconque des revendications précédentes, dans lequel la couche de colle est protégée par un film de protection.

9. Dispositif d'échantillonnage (1) selon l'une quelconque des revendications précédentes, dans lequel la section de fixation (4) présente un élément de recouvrement sous vide (7), par l'intermédiaire duquel la surface extérieure du récipient est aspirée lors de la fixation du dispositif d'échantillonnage (1).

10. Dispositif d'échantillonnage (1) selon la revendication 9, dans lequel l'élément de recouvrement sous vide (7) présente une ouverture, dans laquelle le dispositif d'échantillonnage (1) est introduit avant la fixation sur la surface extérieure du récipient jusqu'à ce que l'élément de recouvrement sous vide (7) vienne buter avec l'élément de raccordement (5) annulaire.

11. Dispositif d'échantillonnage (1) selon la revendication 9 ou 10, dans lequel la section (61) qui dépasse du film de fermeture (6) repose sur un plan (76) de l'élément de recouvrement sous vide (7) avant la fixation de la section de fixation (4) sur la surface extérieure du récipient.

12. Dispositif d'échantillonnage (1) selon la revendication 11, dans lequel l'élément de recouvrement sous vide (7) présente un renfoncement (75), lequel entoure l'axe de l'ouverture de l'élément de recouvrement sous vide (7) et est réalisé plus bas que le plan (76).

13. Dispositif d'échantillonnage (1) selon l'une quelconque des revendications 11 ou 12, dans lequel le plan (76) présente un canal (74) en forme de rainure, lequel permet une aspiration de la section (61) qui dépasse sur le plan (76).

14. Dispositif d'échantillonnage (1) selon la revendication 13, dans lequel le canal (74) en forme de rainure entoure l'ouverture de l'élément de recouvrement sous vide et d'autres canaux (74a) en forme de rainure croisent à des espacements définis le canal (74) en forme de rainure de manière radiale par rapport à l'axe de l'ouverture.

15. Dispositif d'échantillonnage (1) selon l'une quelconque des revendications 13 ou 14, dans lequel un raccord sous vide (73) traverse l'élément de recouvrement sous vide (7), débouche sur une zone d'embouchure (73a) et établit une liaison de communication avec le canal/les canaux.
